# EUROPÄISCHE PATENTSCHRIFT

(11) **EP 2 961 339 B1**
(45) Veröffentlichungstag und Bekanntmachung des Hinweises auf die Patenterteilung: **14.11.2018**
(21) Anmeldenummer: 14708788.6
(22) Anmeldetag: 06.02.2014
(51) Int. Cl.: A61C 5/70

(54) **DENTALE TEILPROTHESE**
PARTIAL DENTAL PROSTHESIS
PROTHÈSE DENTAIRE PARTIELLE

(30) Priorität: 27.02.2013 AT 1512013
(43) Veröffentlichungstag der Anmeldung: 06.01.2016
(73) Patentinhaber: Lampl, Stephan, 9451 Kriessern (CH)
(72) Erfinder: Lampl, Stephan, 9451 Kriessern (CH)
(74) Vertreter: Fechner, Thomas
(86) Internationale Anmeldenummer: PCT/AT2014/000025
(87) Internationale Veröffentlichungsnummer: WO 2014/153575

(56) Entgegenhaltungen:
- WO-A1-2012/000006
- JP-A- H08 112 296
- US-A- 3 423 828
- US-A1- 2004 096 805

## Beschreibung

Die vorliegende Erfindung betrifft eine dentale Teilprothese mit zumindest einer Oberfläche zur Ausbildung einer Kaufläche eines Seitenzahns, wobei die dentale Teilprothese ein zusammengesetztes Material aufweist und das zusammengesetzte Material zumindest ein organisches Bindemittel, vorzugsweise Methacrylat, und, vorzugsweise anorganische, Feststoffpartikel als Füllstoff enthält.

In der Zahnheilkunde sind heutzutage zunehmend Funktionsstörungen zu beheben. Durch Zähneknirschen bzw. Bruxismus und/oder Aufeinanderpressen der Zähne kommt es bei vielen Patienten zum Verschleiß bzw. zur Abrasion der Zähne und insbesondere der Seiten- bzw. Backenzähne. Zähneknirschen bzw. Bruxismus und auch das Aufeinanderpressen der Zähne erfolgt meist unbewusst und oft in der Nacht und über einen längeren Zeitraum, wodurch es zu einer erheblichen Fehlstellung kommen kann, die den Zahnhalteapparat überlastet und zusätzlich das Kiefergelenk, die Kaumuskulatur aber auch andere Muskelgruppen, die zur Stabilisierung des Kopfes angespannt werden müssen, schädigt. Auf diese Weise kann es zu schweren Schmerzsyndromen und Ohrpfeifen bzw. Tinnitus kommen. Weitere häufige Erscheinungen sind Schwindel, Sehstörungen und Übelkeit. Die Schmerzsyndrome werden in der deutschen Literatur als Kraniomandibuläre Dysfunktion bezeichnet.

Beim Stand der Technik ist es bekannt, mit der sogenannten Schienentherapie das Zähneknirschen während der Nacht zu unterbinden. Hierzu werden zwischen die abrasierten also bereits durch Abtragung geschädigten Zähne des Ober- und Unterkiefers entsprechend angefertigte Schienen eingelegt, die die bereits eingetretene Fehlstellung wieder korrigieren. Dies ist allerdings nur über Nacht möglich, sodass die eigentliche Ursache und das eigentliche Problem damit nicht behoben werden kann.

Besonders stark ist die Abrasion im Bereich der Seiten- bzw. Backenzähne. Hier sind die ursprünglichen Kauflächen bei vielen Patienten bereits mehr oder weniger vollständig abgetragen.

Es ist beim Stand der Technik bereits bekannt, die durch die Abrasion bereits fehlenden Teile der Seitenzähne mittels dentaler Teilprothesen zu ersetzen, indem man die dentalen Teilprothesen auf die Seitenzähne aufsetzt und so wieder einen insgesamt höheren Seitenzahn schafft. Die dentalen Teilprothesen bilden dabei zumindest u.a. eine Oberfläche zur Ausbildung der Kaufläche des Seitenzahns. Beim Stand der Technik werden die hierzu benötigten dentalen Teilprothesen individuell vom Zahntechniker von Hand gefertigt. Besonders aufwendig ist hierbei die Schaffung einer der Natur zumindest nahe kommenden Oberflächengestaltung der Kaufläche, also das Nachempfinden der beim natürlichen Zahn vorhandenen Höcker und Fissuren der Kaufläche. Beim Stand der Technik werden die dentalen Teilprothesen vom Zahntechniker aus Metall, wie z.B. Gold, aus Keramik aber auch aus Kunststoff hergestellt.

Die JP H08 112296 A offenbart in Fig. 2 eine gattungsfremde Teilprothese aus Keramik mit zumindest einer Oberfläche zur Ausbildung einer Kaufläche eines Seitenzahns. Die WO 2012/000006 A1 offenbart ein Veneer für einen Frontzahn aus einem zusammengesetzten Material mit organischem Bindemittel, bei dem eine äußere Oberfläche des Veneers laserbehandelt sein kann. Auch diese Schrift ist somit gattungsfremd.

Aus der US 2004/096805 A1 sind gattungsgemäße dentale Teilprothesen bekannt.

Aufgabe der Erfindung ist es, dentale Teilprothesen der oben genannten Art, also dentale Teilprothesen für Seitenzähne, zur Verfügung zu stellen, welche besonders einfach und kostengünstig zur Behebung der oben genannten Schäden eingesetzt werden können und für das tägliche Kauen besonders dauerhaft und stabil sind.

Hierfür ist gemäß der Erfindung vorgesehen, dass zumindest die Oberfläche zur Ausbildung der Kaufläche, vorzugsweise die gesamte nach außen weisende Oberfläche der dentalen Teilprothese, zumindest bereichsweise, vorzugsweise vollständig, von einer Schicht, welche miteinander verschmolzene Feststoffpartikel aufweist, gebildet ist. Im Übrigen ist die Erfindung durch den nachstehenden unabhängigen Anspruch 1 definiert. Bevorzugte Ausführungsformen sind in den abhängigen Ansprüchen definiert.

Die Erfindung basiert somit auf der Grunderkenntnis, dass mit dem genannten zusammengesetzten Material eine relativ kostengünstig herstellbare und vor allem universell einsetzbare Teilprothese geschaffen werden kann, welche zumindest eine Oberfläche zur Ausbildung einer Kaufläche eines Seitenzahns aufweist. Das genannte zusammengesetzte Material überzeugt im Einsatz durch seine für das Einsatzgebiet hervorragenden physikalischen Eigenschaften aber auch durch seine einfache Applizierbarkeit auf den jeweiligen, durch Abrasion geschädigten Seitenzahn. Es hat sich dabei überraschenderweise gezeigt, dass erfindungsgemäße dentale Teilprothesen mit dem genannten zusammengesetzten Material auch dauerhaft so stabil sind, dass sie den, im Seiten- bzw. Backenzahnbereich beim Kauen auftretenden, sehr hohen Kräften dauerhaft standhalten. Durch erfindungsgemäße dentale Teilprothesen, welche, wie nachfolgend noch im Detail geschildert, besonders einfach applizierbar sind, ist es möglich, die oben genannten, durch Abrasion der Seitenzähne hervorgerufenen Probleme in der Anwendung schnell aber dann dauerhaft zu beheben.

Besonders bevorzugte Ausgestaltungsformen der Erfindung sehen vor, dass es sich bei den dentalen Teilprothesen um vorfabrizierte, also vorkonfektionierte, Teilprothesen handelt. Diese vorgefertigten Produkte weisen zumindest eine Oberfläche zur Ausbildung der Kaufläche des Seitenzahns auf. Darüber hinaus können sie auch mehr oder weniger lange Seitenwände aufweisen. Sie können in Form einer Hohlkrone ausgebildet sein, bei der die Seitenwände einen Hohlraum der Hohlkrone umschließen und zum Hinabreichen bis zum Zahnfleisch des Patienten ausgebildet sind. Diese Hohlkronen kommen insbesondere dann zum Einsatz, wenn vom Seitenzahn nur noch ein Zahnstumpf übrig ist oder der Seitenzahn bereits nur noch auf ein künstlich eingesetztes Implantat aufgesetzt werden kann. Sind die zu versorgenden Seitenzähne hingegen durch die Abrasion lediglich in ihrer Vertikalerstreckung gekürzt, so können die dentalen Teilprothesen auch schalenartig ausgebildet sein. Bei diesen Schalen reichen, sofern sie vorhanden sind, die Seitenwände dann nicht bis zum Zahnfleisch. Die gegebenenfalls vorhandenen Seitenwände sind somit in diesen Fällen höchstens unvollständig zum Hinabreichen bis zum Zahnfleisch des Patienten vorgesehen bzw. ausgebildet. Die mehr als flache schalenartige Gebilde ausgebildeten dentalen Teilprothesen, bei denen die Seitenwände nicht bis zum Zahnfleisch herunterreichen, können auch als Onlay bzw. Overlay bezeichnet werden. Das zusammengesetzte Material wird auch häufig als Composite bezeichnet.

Es wurde die Erkenntnis erlangt, dass es ausreicht, für die Behandlung der Seitenzähne Sets mit entsprechend vorkonfektionierten dentalen Teilprothesen bereitzustellen. So ein Set kann jeweils zumindest eine vorfabrizierte, also vorkonfektionierte, dentale Teilprothese für jeden Seitenzahn in drei verschiedenen Größen aufweisen, um damit mehr oder weniger, alle bzw. zumindest die meisten bei den Patienten vorkommenden natürlichen Zahnformen behandeln bzw. verblenden zu können.

Um die Oberfläche zur Ausbildung der Kaufläche des Seitenzahns der dentalen Teilprothese möglichst naturnah also einem natürlichen Zahn entsprechend auszubilden, sehen bevorzugte Varianten vor, dass die Oberfläche zur Ausbildung der Kaufläche Höcker und zwischen den Höckern verlaufende Fissuren aufweist. Die Anordnung der Höcker und Fissuren orientiert sich dabei günstigerweise an den natürlichen Vorbildern. Um die dentale Teilprothese für das tägliche Kauen besonders dauerhaft und stabil auszuführen, sieht die Erfindung, wie eingangs bereits dargelegt, vor, dass zumindest die Oberfläche zur Ausbildung der Kaufläche der dentalen Teilprothese zumindest bereichsweise, vorzugsweise vollständig, von einer Schicht gebildet ist, welche miteinander verschmolzene Feststoffpartikel aufweist. Dies Verschmelzen könnte auch als Sintern bezeichnet werden. Dies kann nur für die Oberfläche zur Ausbildung der Kaufläche so realisiert sein oder aber auch für die gesamte nach außen weisende Oberfläche der dentalen Teilprothese. Besonders bevorzugt ist in diesem Zusammenhang vorgesehen, dass die Schicht ausschließlich aus miteinander verschmolzenen Feststoffpartikeln gebildet ist. Die Schicht aus verschmolzenen Feststoffpartikeln kann günstigerweise als eine durchgehende Schmelzschicht ausgebildet sein. Die miteinander verschmolzenen Feststoffpartikel sind günstigerweise bei der Herstellung der genannten Schicht vollständig aufgeschmolzen worden, so dass in der ausgehärteten Schicht die Feststoffpartikel gar nicht mehr individuell erkennbar sind. Handelt es sich, wie in bevorzugten Ausgestaltungsformen vorgesehen und wie weiter unten ausgeführt, bei den Feststoffpartikeln um Glas bzw. eine Mischung verschiedener Glasarten, so bildet die genannte Schicht eine, vorzugweise durchgehende, verglaste Oberfläche, was letztere besonders stabil und dauerhaft haltbar macht.

Besonders bevorzugte Varianten der Erfindung sehen vor, dass zumindest die Oberfläche zur Ausbildung der Kaufläche, vorzugsweise die gesamte nach außen weisende Oberfläche der dentalen Teilprothese, zumindest bereichsweise laserbehandelt ist. Es kann somit ein Verfahren vorgesehen sein, bei dem zumindest die Oberfläche zur Ausbildung der Kaufläche, vorzugsweise die gesamte nach außen weisende Oberfläche der dentalen Teilprothese, mittels Laserbestrahlung behandelt wird. Bei dieser Laserbestrahlung kommt es bevorzugt zum Ausbrennen des organischen Bindemittels im Bereich der genannten Oberfläche und zum Aufschmelzen und Miteinanderverschmelzen der Feststoffpartikel, sodass sich im Ergebnis bevorzugt eine durchgehende Schmelzschicht ausbildet, welche zumindest im Wesentlichen, vorzugsweise aber vollständig im Endergebnis aus ver- und/oder vollständig aufgeschmolzenen Feststoffpartikeln gebildet ist.

Die erfindungsgemäßen dentalen Teilprothesen sind bevorzugt röntgenopak ausgebildet. Zur Schaffung einer antibakteriellen Oberfläche im Bereich der Kaufläche sehen besonders bevorzugte Varianten der Erfindung vor, dass zumindest die Oberfläche zur Ausbildung der Kaufläche Zink- und/oder Fluoranteile in den Feststoffpartikeln aufweist. Insgesamt kann daraus eine anorganische Oberfläche ausgebildet werden, bei der kein organisches Material, also auch kein organisches Bindemittel mehr vorhanden ist.

Günstig ist es insbesondere, wenn die Feststoffpartikel des Füllstoffs Glas, vorzugsweise eine Mischung verschiedener Glasarten, aufweisen oder daraus bestehen. Die Glasarten können silanisiert sein und sich sowohl in ihrer Färbung als auch in ihrer Zusammensetzung unterscheiden. Z.B. ist es denkbar, Bariumgläser oder Strontiumgläser oder Gemische daraus zu verwenden. Allgemein kann es sich um oberflächenbehandeltes Si02 handeln. Um eine hohe Festigkeit der dentalen Teilprothese zu erreichen, ist es günstig, die Feststoffpartikel des Füllstoffes in einer möglichst dichten Packung in der dentalen Teilprothese anzuordnen. Hierzu ist es günstig, wenn der Füllstoff Feststoffpartikel mit voneinander verschiedenen Korngrößen aufweist. Generell gesprochen sehen bevorzugte Ausgestaltungsformen vor, dass die Korngrößen der Feststoffpartikel des Füllstoffs in einem Bereich zwischen 0,01 µm und 50 µm liegen. Um eine möglichst hohe Packungsdichte zu erreichen, sind aber insbesondere auch die kleinen Korngrößen wichtig, da sie die Zwischenräume zwischen den größeren Körnern füllen. In diesem Sinne ist es günstig, wenn der Füllstoff Feststoffpartikel mit Korngrößen zwischen 0,01 µm und 3 µm aufweist. Im Sinne der Festigkeit ist weiters ein möglichst hoher Füllgrad des zusammengesetzten Materials der dentalen Teilprothese anzustreben. Der Anteil der Feststoffpartikel des Füllstoffs am zusammengesetzten Material sollte also möglichst hoch sein. Bevorzugte Ausgestaltungsformen sehen in diesem Zusammenhang vor, dass der Volumenanteil der Feststoffpartikel am zusammengesetzten Material zumindest 78% beträgt. Bevorzugt liegt dieser Volumenanteil der Feststoffpartikel außerhalb der gegebenenfalls vorhandenen Schicht mit den ver- bzw. aufgeschmolzenen Feststoffpartikeln im Bereich zwischen 78% und 85%. In der Schicht aus oder mit ver- bzw. aufgeschmolzenen Feststoffpartikeln ist dieser Volumenanteil des Materials der Feststoffpartikel natürlich noch höher und geht gegen bzw. erreicht 100%. Der Vollständigkeit halber sei darauf hingewiesen, dass die Feststoffpartikel, abgesehen von der Schicht, in der sie aufge- bzw. verschmolzen sind, im zusammengesetzten Material in das organische Bindemittel eingebunden sind und von diesem zusammengehalten werden.

Als organische Bindemittel verwenden bevorzugte Ausgestaltungsformen der Erfindung Methacrylat- basierte Bindemittel. Diese können aus Methacrylat bestehen oder Methacrylat, vorzugsweise als Hauptbestandteil, aufweisen.

Als zusammengesetztes Material für die Herstellung der dentalen Teilprothese kann z.B. das unter der Bezeichnung REF 2061 erhältliche Produkt der Firma Indigodental GmbH & Co. KG, in Pinneberg, Deutschland verwendet werden. Dieses Produkt enthält Triethylenglykoldimethacrylat, Urethandimethacrylat, Bis-GMA und ethoxyliertes Bisphenol A Dimethacrylat. Als organisches Bindemittel kann z.B. das Produkt REF 2050 dieser Firma verwendet werden.

Eine wichtige Aufgabe beim Anbringen der dentalen Teilprothesen an den Seitenzähnen ist es, die Farbgebung der Teilprothese so auszubilden, dass sie an die Gegebenheiten im Mund des Patienten angepasst ist und vor allem zur Farbe der noch vorhandenen natürlichen Zahnsubstanz passt. Bevorzugte Ausgestaltungsformen der Erfindung sehen vor, dass die dentale Teilprothese standardisiert eine Farbe aufweist, welche der Farbe von natürlichem Zahnschmelz nahekommt. Besonders bevorzugt ist in diesem Sinne vorgesehen, dass die dentale Teilprothese für sichtbares Licht transluzent bzw. durchscheinend, also nicht opak ausgebildet ist. Eine Idee besteht darin, die Farbanpassung vorzunehmen, indem man ein jeweils entsprechend eingefärbtes Befestigungsmaterial verwendet, welches beim Anbringen der dentalen Teilprothese zwischen dieser und dem Zahn bzw. Zahnstumpf angeordnet ist und durch die transluzente Teilprothese hindurchscheint, und so die endgültige, nach außen hin wahrnehmbare Farbe des Gesamtaufbaus prägt. Untersuchungen haben ergeben, dass die Teilprothesen günstigerweise eine Transluzenz von 28% bis 39% und/oder einen L-Wert von 59 bis 69 und/oder einen α-Wert von -0,35 bis -3,2 und/oder einen b-Wert von -0,4 bis -6,95 aufweist. Bei der Transluzenz handelt es sich um die Lichtdurchlässigkeit, also die reziproke Eigenschaft zur Opazität. Die genannten Werte beziehen sich auf eine Messung gemäß DIN 6174. Auch der Lab-Farbraum ist beim Stand der Technik bekannt. Er ist auf Grundlage der Gegenfarbentheorie konstruiert und ermöglicht die farbmetrische Bestimmung von Farbmaßzahlen und Farbabständen im angenähert gleichförmigen CIELAB-Farbenraum. Die Bestimmung des L-Werts, des α-Werts und des b-Werts erfolgt ebenfalls gemäß den Vorgaben von DIN 6174. In Anwendung der Gegenfarbentheorie liegen sich hier Grün und Rot auf der α-Achse gegenüber. Die b-Achse entspricht den Gegenfarben Blau und Gelb. Die L-Achse steht auf dieser Ebene senkrecht und gibt die Helligkeit wieder.

Als Befestigungsmaterial wird günstigerweise dasselbe zusammengesetzte Material verwendet, aus welchem auch die dentale Teilprothese, abgesehen von der gegebenenfalls vorhandenen ver- bzw. aufgeschmolzenen oder auch gesinterten Schicht, ausgebildet wird. Als Farbstoffe, insbesondere zum Einfärben des Befestigungsmaterials können z.B. organische Pigmente und/oder anorganische Weißmacher wie TIO2 verwendet werden.

Aufgrund ihrer hohen Festigkeit können die dentalen Teilprothesen relativ dünn ausgeführt sein. Bevorzugte Varianten sehen vor, dass die dentale Teilprothese im Bereich der Oberfläche zur Ausbildung der Kaufläche des Seitenzahns eine Dicke zwischen 0,3 mm und 0,6 mm aufweist. Die Dicke der dentalen Teilprothese im Bereich der Seitenwände liegt günstigerweise zwischen 0,1 mm und 0,25 mm.

Zur Applikation der dentalen Teilprothese kann der Anwender dieses vorkonfektionierte Produkt verwenden, indem er, wie weiter unten noch im Detail dargestellt, zunächst den zu verblendenden Seitenzahn bzw. dessen Zahnstumpf zunächst in bisher bekannter Art und Weise soweit notwendig bearbeitet bzw. zuschleift und mit einem geeigneten Ätzmittel anätzt, um die durch das Bohren oder Schleifen verursachte Schmierschicht wegzuätzen und die Tubuli freizulegen. Geeignete Ätzmittel bzw. Ätzgele sind z.B. 15-37%ige Phosphorsäuren oder das Produkt REF2052 der oben bereits genannten Firma. Auf den geätzten Seitenzahn wird dann bevorzugt ein Haftvermittler also ein sogenanntes Bonding aufgebracht. Es ist auch denkbar, bereits fertige Mischungen aus Ätzmittel und Haftvermittler einzusetzen. Generell kann es sich bei den Haftvermittlern bzw. beim Bonding um niedermolekulare Methacrylate handeln. Es können auch Monumere eingesetzt werden, welche ein hydrophiles oder hydrophobes Ende haben, wie z.B. methacrylierte Polyacrylsäuren. Als Haftvermittler können z.B. die mit REF 2050 und REF 2051 bezeichneten Produkte der oben bereits genannten Firma Indigodental GmbH & Co KG verwendet werden. Beim Produkt REF2051 handelt es sich um ein BIS-GMA basiertes Methacrylat. Auf die Schicht aus Haftvermittler kann dann das Befestigungsmaterial aufgebracht werden. Durch die Menge des Befestigungsmaterials kann die Höhe der dentalen Teilprothese über dem abrasierten Seitenzahn eingestellt werden. Je mehr Befestigungsmaterial unter die dentale Teilprothese bzw. in deren Hohlraum eingebracht wird, desto größer ist dann auch der endgültige Abstand zwischen dentaler Teilprothese und dem von ihr verblendeten Seitenzahn. Zwischen dem Befestigungsmaterial, welches vorzugsweise dasselbe Material wie das zusammengesetzte Material ist, und der dentalen Teilprothese wird bevorzugt noch einmal eine Schicht Haftvermittler aufgebracht. Durch Einfärbung des Befestigungsmaterials und/oder des Haftvermittlers wird günstigerweise, wie bereits ausgeführt, die farbliche Gestaltung des Gesamtaufbaus und damit auch die farbliche Erscheinungsform der fertig applizierten dentalen Teilprothese gesteuert. Das Befestigungsmaterial liegt günstigerweise in einer pastösen Form vor. Zum Aushärten des Befestigungsmaterials kann, wie an sich bekannt, eine im Folgenden nochmals genannte LED-Lampe oder dergleichen eingesetzt werden. Der beim Aushärten des Befestigungsmaterials auftretende Schrumpfungsprozess kann durch den Haftvermittler ausgeglichen bzw. aufgefangen werden. Durch einen entsprechend hohen Füllgrad, also einen entsprechend hohen Volumenanteil von Feststoffpartikeln im Befestigungsmaterial bzw. im zusammengesetzten Material tritt aber generell eine relativ geringe Schrumpfung beim Aushärten auf.

Um dem Anwender wie z.B. dem Zahnarzt, abgesehen von seiner normalen Ausstattung, alle für die Behandlung benötigten Hilfsmittel zur Verfügung zu stellen, sieht eine bevorzugte Ausgestaltungsform der Erfindung ein Set mit mehreren vorkonfektionierten, insbesondere verschieden großen und/oder verschieden geformten, erfindungsgemäßen dentalen Teilprothesen vor. Das Set kann zusätzlich, vorzugsweise, flüssiges oder pastöses, Befestigungsmaterial und gegebenenfalls verschiedene Farben zum Einfärben des Befestigungsmaterials mit aufweisen. Genausogut ist es natürlich möglich, mehrere bereits eingefärbte, vorzugsweise flüssige oder pastöse, Befestigungsmaterialien im Set vorzusehen. Das Set kann weiters auch geeignete Ätzmittel und/oder Haftvermittler bzw. Bondings mit umfassen. Dies ermöglicht es letztendlich dem Anwender bzw. Zahnarzt, aus den ihm vom Set zur Verfügung gestellten dentalen Teilprothesen diejenige Größe auszusuchen, welche der natürlichen Situation am zu behandelnden Seitenzahn oder Zahnstumpf des Seitenzahnes am nächsten kommt. Die restliche Anpassung kann dann durch Bearbeiten bzw. Zuschleifen dieser Teilprothese vor Ort vorgenommen werden. Hierzu kann der Zahnarzt bzw. Anwender auf die ihm standardmäßig zur Verfügung stehenden Schleifgeräte zurückgreifen. Weiters kann der Zahnarzt, soweit vorhanden, die geeignete Farbe bzw. das geeignet angefertigte Befestigungsmaterial aussuchen, mit dem er die dentale Teilprothese am Seitenzahn bzw. dessen Zahnstumpf befestigt, vorzugweise anklebt, sodass auch die gewünschte Färbung der dann am Seitenzahn bzw. dessen Zahnstumpf befestigten Teilprothese erreicht ist.

Ein Verfahren zur Herstellung erfindungsgemäßer dentaler Teilprothesen aus dem z.B. im Handel erhältlichen und eingangs genannten, zusammengesetzten Material kann folgende Schritte vorsehen:
Zunächst kann das zusammengesetzte Material bzw. Composite, mit dem organischen Bindemittel und den Feststoffpartikeln, zur Vorbereitung in Kartuschen gefüllt und auf ca. 100° Celsius erwärmt werden, wodurch das Material für die nachfolgende Weiterverarbeitung weich gemacht werden kann. Das zusammengesetzte Material kann dann mit 80 bis 100bar unter Druck gesetzt werden. Insbesondere in dieser Art und Weise vorbehandelt, wird das zusammengesetzte Material in eine, vorzugsweise zumindest einseitig lichttransparent ausgeführte, Zahnform injiziert. Die Zahnformen z.B. können aus Glas und Chromstahl hergestellt sein. Zur Aushärtung des zusammengesetzten Materials in der Zahnform kann das zusammengesetzte Material auf ca. 130° Celsius erwärmt und für ca. 15 Minuten bei dieser Temperatur thermisch gehärtet werden. Zusätzlich kann, vorzugsweise zumindest während eines Teils dieser Zeit z.B. während der ersten 10 dieser 15 Minuten, auch ein Aushärten durch Lichtanwendung durch die lichttransparent ausgeführten Bereiche der Zahnform hindurch erfolgen. Dies kann z.B. mit einem geeigneten LED-Licht durchgeführt werden. Ein geeignetes LED-Licht ist z.B. charakterisiert durch eine Wellenlänge von 450 Nanometern (nm) bis 480 nm. Mit der Lichtbehandlung können die beschienenen Oberflächen in ihren Eigenschaften durch Polymerisationsschrumpfen verbessert werden. Hierdurch werden die Feststoffpartikel an den beschienenen Oberflächen näher zusammengebracht. Während des Aushärtens wird das zusammengesetzte Material in der Zahnform vorzugsweise unter einem Druck zwischen 80 bis 100 bar gehalten, was zu einer guten Verdichtung des gesamten Materials in der Zahnform führt. Zur Unterstützung des beschriebenen thermischen bzw. lichtbedingten Aushärtens können als Zusätze geeignete thermische Initiatoren, wie z.B. Benzopinacol oder 2,2' Dialkylbenzopinacol bzw. geeignete Photoinitiatoren, wie z.B. Benzophenon, Benzoin oder Derivate davon, eingesetzt werden. Danach können die dentalen Teilprothesen, vorzugsweise nach und nach, abgekühlt und aus der Zahnform entnommen werden. Die dentalen Teilprothesen können dazu in einen Behälter mit Stickstoffatmosphäre eingebracht werden, um eine Oxydation des organischen Bindemittels zu vermeiden. Besonders günstige Varianten sehen dann vor, dass zumindest an der später die Kaufläche bildenden Oberfläche oder an der gesamten, nach außen weisenden Oberfläche der dentalen Teilprothese eine Laserlichtbearbeitung stattfindet. Das Laserlicht kann dabei zum Beispiel 80 Mikrometer tief in das Material eindringen. Bei der Laserbearbeitung der fazialen Flächen wird das organische Bindemittel an der behandelten Oberfläche der dentalen Teilprothese entfernt und die Feststoffpartikel werden aufgeschmolzen bzw. miteinander verschmolzen bzw. gesintert und bilden dann nach Abschluss der Laserbehandlung eine durchgehende ausgehärtete Schmelzschicht als Oberfläche der dentalen Teilprothese. Diese ausgehärtete bzw. verglaste Schmelzschicht ist in einem Schnitt durch die dentalen Teilprothesen nachweisbar und weist bevorzugt Dicken zwischen 20 und 40 Mikrometer (µm) auf. Anschließend kann ein Zuschneiden oder Nachbearbeiten, wie z.B. Schleifen oder sonstiges Glätten der dentalen Teilprothese erfolgen.

Weitere Merkmale und Einzelheiten bevorzugter Ausgestaltungsformen der Erfindung werden anhand von Ausführungsbeispielen nachfolgend erläutert. Es zeigen:
Fig. 1 bis 7 Darstellungen zu erfindungsgemäßen dentalen Teilprothesen für Seitenzähne des Unterkiefers;
Fig. 8 bis 10 Darstellungen zu erfindungsgemäßen dentalen Teilprothesen für Seitenzähne des Oberkiefers;
Fig. 11 mittels erfindungsgemäßer dentaler Teilprothesen aufgebaute Seitenzähne des Ober- und Unterkiefers in Bissstellung;
Fig. 12 einen Vertikalschnitt durch eine erfindungsgemäße dentale Teilprothese auf einem Implantat und
Fig. 13 eine schematisch Darstellung zum Materialaufbau der erfindungsgemäßen dentalen Teilprothesen.

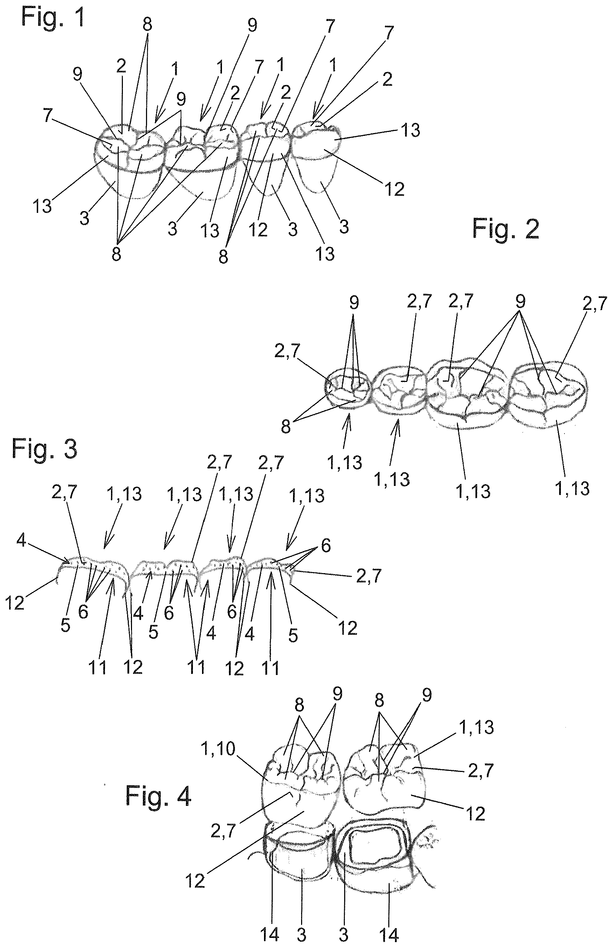

In Fig. 1 ist eine perspektivische Seitenansicht dargestellt, in der durch Abrasion abgenutzte Seitenzähne 3 mittels erfindungsgemäßer dentaler Teilprothesen 1 restauriert sind. Von den verbliebenen Seitenzähnen 3 ist der Teil zu sehen, welcher aus dem Zahnfleisch herausschaut und nicht von den jeweiligen dentalen Teilprothesen 1 verdeckt ist. Von den dentalen Teilprothesen 1 sind die Oberflächen 2 zu sehen, welche die Kaufläche bilden. Zu sehen sind auch die Seitenwände 12, welche bei diesem Ausführungsbeispiel nicht bis zum Zahnfleisch herunterragen. Es handelt sich hier somit bei den dentalen Teilprothesen 1 um die eingangs genannten Schalen 13, welche auch als Onlays bzw. Overlays bezeichnet werden können. Auf der Oberfläche 2 sind deutlich die Höcker 8 und dazwischen angeordnete Fissuren 9 dieser künstlich geschaffenen Oberfläche 2 der dentalen Teilprothese 1 zu sehen. Diese sind den natürlichen Formen von gesunden Zähnen nachempfunden. Im gezeigten, bevorzugten Ausführungsbeispiel ist die gesamte äußere Oberfläche der jeweiligen dentalen Teilprothese 1, also sowohl die die Kauflächen bildenden Oberflächen 2 als auch die nach außen weisenden Oberflächen der Seitenwände 12 aus einer Schicht 7, weiche miteinander verschmolzene Feststoffpartikel 6 aufweist, gebildet. Es handelt sich bei der Schicht 7 im gezeigten Ausführungsbeispiel um eine durchgehende Schmelzschicht. Fig. 2 zeigt eine Draufsicht auf diese Situation und damit eine Draufsicht auf die, die Kauflächen bildenden Oberflächen 2.

In Fig. 3 ist ein Vertikalschnitt durch die vier dentalen Teilprothesen 1 zu sehen, bei dem die verblendeten Seitenzähne 3 nicht dargestellt sind. Hier sind besonders gut die sehr dünn ausgeführten Seitenwände 12 zu sehen, wie auch das zusammengesetzte Material 4 mit dem Bindemittel 5 und den darin angeordneten Feststoffpartikeln 6. In der Darstellung des zusammengesetzten Materials 4 handelt es sich um eine symbolische Darstellung, die die wahren Mischungsverhältnisse nicht abbildet. Bevorzugt handelt es sich, wie eingangs ausgeführt, um zusammengesetzte Materialien 4 mit einem Volumenanteil der Feststoffpartikel 6 von zumindest 78%.

Zu sehen sind in der Darstellung gemäß Fig. 3 jedenfalls auch die Hohlräume 11, welche, wie weiter unten dargestellt, bei der Anbringung der jeweiligen dentalen Teilprothese 1 am jeweiligen durch Abrasion gekürzten Seitenzahn 3 mit Befestigungsmaterial 16 und Haftvermittler 15 gefüllt werden. Über eine entsprechende Menge von im Hohlraum 11 vorhandenem Befestigungsmaterial 16 kann die Höhenlage der dentalen Teilprothese 1 und damit die Höhe des fertig verblendeten Seitenzahns 3 eingestellt werden.

Fig. 4 zeigt neben einer ebenfalls als Schale 13 ausgeführten dentalen Teilprothese 1 auch eine als Hohlkrone 10 ausgeführte andere dentale Teilprothese 1. Gezeigt ist jeweils die Situation, bevor die dentalen Teilprothesen 1 auf die zu restaurierenden Seitenzähne 3 aufgesetzt werden. Der Unterschied zwischen der Ausführungsform als Hohlkrone 10 und der als Schale 13 bzw. als Onlay oder Overlay liegt im Wesentlichen im Vorhandensein und/oder in der Länge der Seitenwände 12. Bei der Hohlkrone 10 reichen deren Seitenwände 12 im fertig applizierten Zustand bis zum Zahnfleisch des Patienten, während bei der Variante, bei der die dentale Teilprothese 1 als Schale 13 ausgeführt ist, in der fertig applizierten Form, wie in Fig. 1 dargestellt, zwischen den Seitenwänden 12 und dem Zahnfleisch noch ein Stück des ursprünglichen Seitenzahns 3 hervorschaut.

Bei dem mittels Hohlkrone 10 zu sanierenden Seitenzahn 3 handelt es sich letztendlich nur noch um einen Zahnstumpf, welcher in dem Bereich, in dem er aus dem Zahnfleisch heraussteht, vollständig in den Hohlraum 11 der Hohlkrone 10 eingeführt wird.

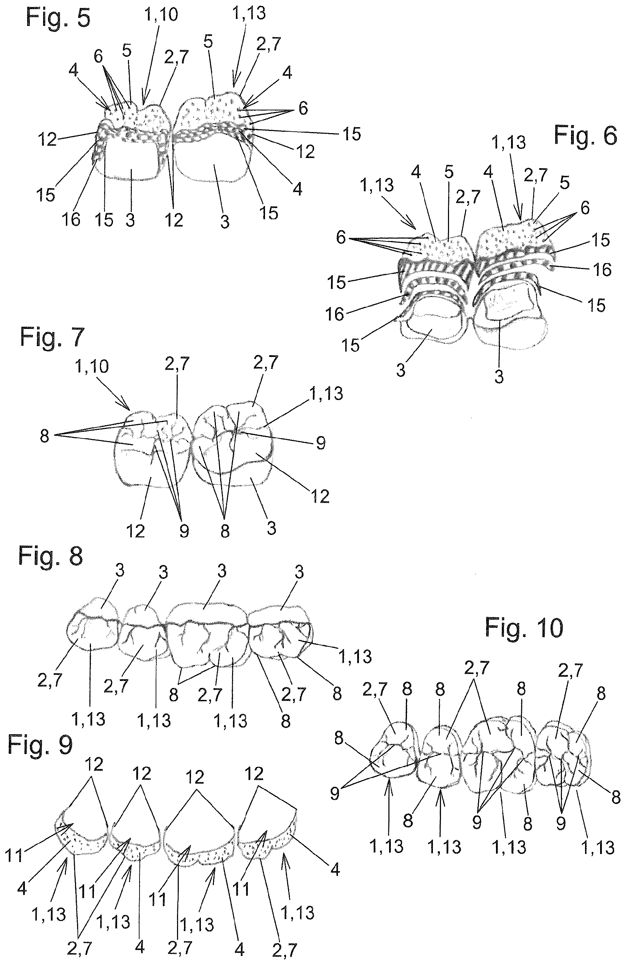

Um das Applizieren der jeweiligen dentalen Teilprothesen 1 zu vereinfachen, wird das weiter unten noch im Detail näher in seiner Anwendung beschriebene, beim Stand der Technik aber an sich bekannte Matrizenband 14 verwendet, welches um die jeweiligen Seitenzähne 3 herumgelegt ist. Fig. 7 zeigt in einer Perspektive die Situation, wenn die dentalen Teilprothesen 1 aus Fig. 4 fertig auf die Seitenzähne 3 appliziert sind. Fig. 5 zeigt einen Vertikalschnitt durch die Situation gemäß Fig. 7. In Fig. 5 ist gut zu sehen, dass auf den jeweils zu versorgenden Seitenzahn 3 zunächst eine Schicht aus Haftvermittler 15 aufgebracht ist. Daran anschließend folgt eine Schicht aus Befestigungsmaterial 16. Beim Befestigungsmaterial 16 handelt es sich günstigerweise um dasselbe Material wie das zusammengesetzte Material 4, mit dem die dentale Teilprothese 1 ausgebildet ist. Durch die Dicke der Schicht des Befestigungsmaterials 16 kann die Höhe der die Kaufläche bildenden Oberfläche 2 über dem Zahnfleisch eingestellt werden. Zwischen der Schicht aus Befestigungsmaterial 16 und der den Hohlraum 11 begrenzenden Oberfläche der jeweiligen dentalen Teilprothese 1 befindet sich nochmals eine Schicht aus Haftvermittler 15. In Fig. 6 ist die Situation gemäß Fig. 5 in einer Explosionsdarstellung gezeigt, um die einzelnen Schichten besser sichtbar zu machen. Es wird darauf hingewiesen, dass die Dicke der Schichten aus Haftvermittler 15 und Befestigungsmaterial 16 nicht maßstabsgemäß dargestellt sind. Die Dicke der Schicht aus Befestigungsmaterial 16 ist in der Regel wesentlich höher als die der Haftvermittlerschichten 15.

In den Fig. 8 bis 10 sind vier Seitenzähne 3 des Oberkiefers dargestellt, sofern sie aus dem Zahnfleisch herausstehen und nicht von den ebenfalls dargestellten dentalen Teilprothesen 1 verdeckt sind. Es gilt entsprechend das zu den Fig. 1 bis 3, also das zu der entsprechenden Situation im Unterkiefer Gesagte.

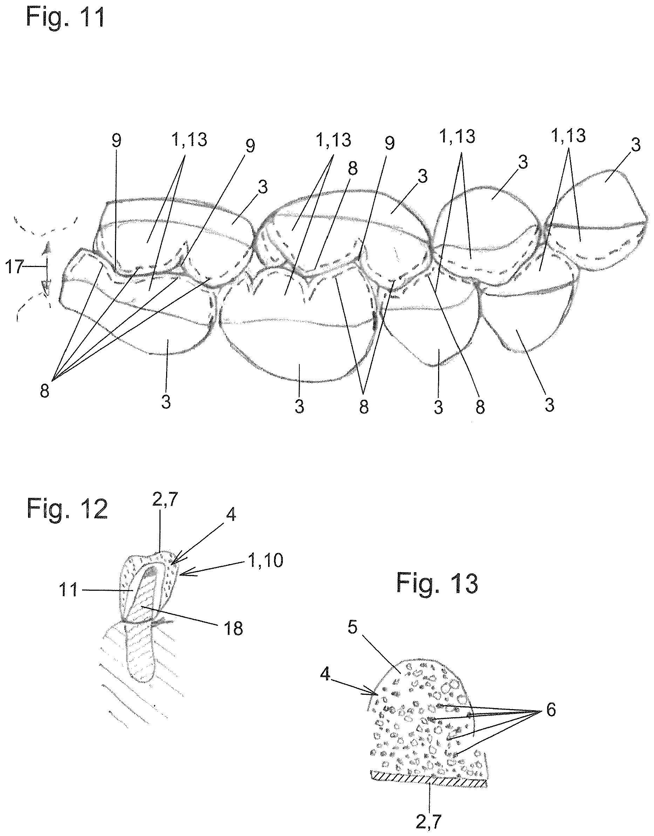

Fig. 11 zeigt die mittels der dentalen Teilprothesen 1 verblendeten Seitenzähne 3 des Ober- und Unterkiefers, wie sie in der Bissstellung mit ihren durch Höcker 8 und Fissuren 9 ausgeformten, die Kauflächen bildenden Oberflächen 2 aufeinander aufliegen. Durch die Applikation der dentalen Teilprothesen 1 auf die vorher abrasierten Seitenzähne 3 ist wieder eine optimale Bisssituation hergestellt, die die eingangs dargelegten Probleme behebt. Bezugszeichen 17 zeigt die Bisshöhe vor Anbringung der dentalen Teilprothesen 1. Durch die Behandlung ist die Bisshöhe deutlich erhöht worden.

In Fig. 12 ist in einem schematisiert dargestellten Vertikalschnitt gezeigt, wie eine erfindungsgemäße, als Hohlkrone 10 ausgebildete dentale Teilprothese 1 auf ein im Zahnfleisch 18 bzw. im Kieferknochen wie bekannt angeordnetes Implantat 18 aufgesetzt wird. Der Hohlraum 11 der Hohlkrone 10 ist günstigerweise deutlich größer als der in sie eingeführte Teil des Implantates 18. Der verbleibende Hohlraum 11 wird analog zu den Darstellungen von Fig. 5 und 6 mit Haftvermittler 15 und Befestigungsmaterial 16 befüllt, was dann auch zur Befestigung der dentalen Teilprothese 1 am Implantat 18 führt. Die wesentlich größere Ausbildung des Hohlraums 11 hat den Vorteil, dass man bei der korrekten Ausrichtung der dentalen Teilprothese 1 relativ viel Spielraum hat und diese nicht von der Lage des Implantats 18 zwingend vorgegeben ist. Hierdurch können Fehler in der Ausrichtung des Implantats 18 in einfacher Weise korrigiert werden. Analog wird günstigerweise auch vorgegangen, wenn Zahnstümpfe wie in Fig. 4 gezeigt, mittels Hohlkronen 10 versorgt werden. Auch hier ist der Hohlraum 11 günstigerweise einiges größer als der verbliebene Zahnstumpf.

Fig. 13 zeigt noch einen vergrößerten und schematisiert dargestellten Schnitt durch das zusammengesetzte Material 4 und die randlich daran angeordnete, die Oberfläche bildende Schicht 7 aus aufge- bzw. verschmolzenen Feststoffpartikeln 6 einer dentalen Teilprothese 1. Wenn auch hier die Volumenverhältnisse nicht exakt wiedergegeben sind, so ist doch gut zu sehen, wie die Feststoffpartikel 6 im organischen Bindemittel 5 eingebettet sind. Die Schicht 7 aus aufgeschmolzenen Feststoffpartikeln 6 ist günstigerweise frei von Bindemittel 5. Sie kann in der Realität in einem entsprechenden Schnitt durch eine entsprechende dentale Teilprothese 1 gut sichtbar gemacht werden.

Im nun Folgenden wird beispielhaft noch erläutert, wie die erfindungsgemäßen dentalen Teilprothesen 1 auf entsprechend zu behandelnde Seitenzähne 3 appliziert, also angebracht werden können.

Bei einer ersten Variante werden die zu versorgenden Seitenzähne 3 zunächst gemäß des Standes der Technik präpariert und mittels Ätzmittel angeätzt. Anschließend erfolgt die Aufbringung des Haftvermittlers 15 bzw. des Bondings auf die so präparierten Seitenzähne 3. Dann können die in Fig. 4 schematisch dargestellten, an sich bekannten Matrizenbänder 14 um die zu versorgenden Seitenzähne 3 herum angebracht werden. Mit Hilfe der Matrizenbänder 14 können dann die interdentalen sowie bukalen und lingualen Zahnformen kontrolliert in mehreren Schichten bestehend aus Befestigungsmaterial 16 wieder aufgebaut werden. Anstatt, wie beim Stand der Technik bekannt, dem okklusalen, also die Kaufläche betreffenden Bereich frei Hand zu modellieren, werden die erfindungsgemäßen dentalen Teilprothesen 1 basal mit Haftvermittler versehen und auf das Befestigungsmaterial aufgebracht. Das Befestigungsmaterial kann dann mittels einer Polymerisationslampe fixiert werden, womit die dentalen Teilprothesen 1 am jeweiligen Seitenzahn 3 fixiert sind. Das Befestigungsmaterial 16 liegt dann in einer Art Sandwichstellung, wie z.B. in Fig. 5 zu sehen, zwischen der vorgefertigten dentalen Teilprothese 1 und dem Seitenzahn 3. Nach Aushärten des Befestigungsmaterials 16 können die Matrizenbänder 14 entfernt werden. Soweit notwendig, kann die so geschaffene Rekonstruktion mit rotierenden Schleifgeräten oder dergleichen, wie sie für den Zahnarztbedarf bekannt sind, final bearbeitet werden. Die Okklusionen also die korrekte Auflage in der Bissstellung der die Kauflächen bildenden Oberfläche 2 kann dann anschließend reokkludiert, also durch Beschleifen final bearbeitet werden, soweit dies erforderlich ist und bis die gewünschten Kontaktpunkte erzielt sind. Dies kann mittels gewöhnlicher Kontaktpunktfolien, wie beim Stand der Technik bekannt, überwacht bzw. eingefärbt werden.

Eine andere Art der Applikation der dentalen Teilprothesen 1 auf die zu verblendenden Seitenzähne 3 sieht vor, dass zunächst, wie an sich bekannt, mittels Abdruck oder dergleichen Modelle der vor der Behandlung gegebenen Situation im Ober- und Unterkiefer hergestellt werden. Diese Ober- und Unterkiefermodelle können dann in beim Stand der Technik bekannter Art und Weise in einem Artikulator schädelgerecht einartikuliert werden. Anschließend kann durch entsprechendes Verstellen der einartikulierten Ober- und Unterkiefermodelle relativ zueinander die Situation im Artikulator eingestellt werden, wie sie beim Patienten mit Anwendung der dentalen Teilprothesen 1 am Ende der Behandlung erreicht werden soll. Hierdurch entstehen im Artikulator zwischen den Ober- und Unterkiefermodellen Lücken, welche die durch Abrasion der natürlichen Seitenzähne 3 verlorengegangene Zahnsubstanz wiederspiegeln. Es können nun im Bereich der Seitenzähne Aufbissschienen in an sich bekannter Art und Weise z.B. aus Kunststoff geschaffen werden, welche diese genannten Lücken zwischen Ober- und Unterkiefermodell bzw. den entsprechenden Seitenzähnen 3 füllen. Diese so hergestellten Aufbissschienen können zum Test beim Patienten auf die abradierten Seitenzähne 3 aufgebracht werden und dort für einen gewissen Zeitraum von z.B. einer Woche verbleiben, um zu testen, ob zunächst mit den Aufbissschienen die gewünschte neue Stellung von Ober- und Unterkiefer relativ zueinander tatsächlich erreicht wird. Ergibt dieser Test, dass noch eine Nachjustierung notwendig ist, so können die Aufbissschienen entsprechend, z.B. durch bereichsweises zuschleifen, überarbeitet werden, bis die optimale Stellung im Mund des Patienten erreicht ist. Wird eine entsprechende Überarbeitung der Aufbissschienen durchgeführt, so erfolgt im Artikulator soweit notwendig eine entsprechende Nachjustierung der Lage von Ober- und Unterkiefermodell relativ zueinander mittels der überarbeiteten Aufbissschienen. Ist die Lage von Ober- und Unterkiefermodell relativ zueinander im Artikulator endgültig erreicht, so werden, gegebenenfalls nach Entfernen der Aufbissschienen, die Zwischenräume zwischen dem im Artikular einartikulierten Ober- und Unterkiefermodell im Bereich der Seitenzähne 3 mittels Silikon ausgegossen, um so für beide Seitenzahnbereiche Bissregistrierkörper herzustellen. Diese sind dann so geformt, dass, wenn der Patient auf sie entsprechend mit den Seitenzähnen draufbeißt, Oberkiefer und Unterkiefer des Patienten in die Stellung relativ zueinander kommen, wie sie am Ende der Behandlung also nach fertiger Applikation der erfindungsgemäßen dentalen Teilprothesen 1 an den natürlich noch vorhandenen Seitenzähnen 3 erreicht werden soll.

Die so erzeugten Bissregistrierkörper können anschließend in unterschiedlicher Art und Weise für die Applikation der dentalen Teilprothesen 1 auf den Seitenzähnen 3 verwendet werden.

Bei einer dieser Verwendungen ist vorgesehen, dass der entsprechende Bissregistrierkörper im Artikulator zwischen dem Oberkiefer- und Unterkiefermodell auf einer Seite zwischen den entsprechenden Seitenzähnen angeordnet wird. Auf der anderen Seite werden dann auf den zu behandelnden Seitenzähnen des Ober- und Unterkiefermodells zunächst mit dem Befestigungsmaterial 16 und darauf aufliegend dann mit der dentalen Teilprothese 1 Prothesen geschaffen, die nach ihrer Fertigstellung und gegebenenfalls entsprechendem Einschleifen dann beim Patienten an der entsprechenden Stelle auf den jeweiligen Seitenzahn 3 nur noch aufgeklebt werden müssen. Die exakte Höhenlage der dentalen Teilprothesen 1 über den jeweiligen Seitenzähnen 3 kann durch entsprechendes Öffnen und Schließen des Artikulators eingestellt werden. Dabei kann es zum Herausdrücken des noch nicht verfestigten Befestigungsmaterials 16 aus den Hohlräumen 10 der jeweiligen dentalen Teilprothese 1 kommen. Dies kann dann nach Aushärten des Befestigungsmaterials 16 aber entsprechend abgeschliffen werden. Das Aushärten des Befestigungsmaterials erfolgt entsprechend mit LED-Licht, wie dies eingangs geschildert ist. Ist die eine Seite entsprechend fertiggestellt, so kann der Bissregistrierkörper entnommen werden, um dann die andere Seite dann entsprechend zu bearbeiten. Bei dieser Variante können die dentalen Teilprothesen 1 in ihrer vorkonfektionierten Form also dazu verwendet werden, dass auf den entsprechenden einartikulierten Ober- und Unterkiefermodellen vom Zahntechniker zunächst für die jeweilige Patientensituation durch Unterfüttern der jeweiligen Teilprothese 1 mit den entsprechenden Mengen von Befestigungsmaterial 16 exakt passende Prothesen geschaffen werden, die dann vom Zahnarzt im Mund des Patienten nur noch auf den Seitenzähnen 3 befestigt und falls notwendig zur Reokklusion eingeschliffen werden müssen.

Eine andere Variante der Applikation der erfindungsgemäßen vorfabrizierten dentalen Teilprothesen 1 sieht vor, dass einer der wie oben geschildert gefertigten Bissregistrierkörper direkt einseitig im Mund des Patienten zwischen den entsprechenden Seitenzähnen 3 von Ober- und Unterkiefer angeordnet werden und auf der anderen Seite die zu versorgenden Seitenzähne 3, gegebenenfalls nach einem Anätzen der Zähne, zunächst mittels Haftvermittler 15 und Befestigungsmaterial 16 und darauf aufliegend mittels der vorgefertigten dentalen Teilprothesen 1 aufgebaut werden. Der Zahnarzt realisiert bei dieser Variante letztendlich dieselbe Vorgehensweise, wie vorab geschildert der Zahntechniker am Artikulator, nur bei dieser Variante eben direkt im Mund des Patienten. Die exakte Ausrichtung der dentalen Teilprothese 1 kann wiederum durch einfaches Zubeißen erreicht werden, da sie durch den Bissregistrierkörper ja vorgegeben ist. Das Aushärten des Befestigungsmaterials 16 erfolgt wiederum mittels LED-Lampe. Nach dem Aushärten kann wiederum direkt in situ, soweit notwendig, noch eine Endbearbeitung mittels Abschleifen zur Reokklusion erfolgen.

Die zuerst und die zuletzt genannte Ausführungsvariante haben den Vorteil, dass die Applikation der vorfabrizierten dentalen Teilprothesen 1 im Mund des Patienten schnell und kostengünstig in einer einzigen Sitzung vom Zahnarzt direkt vorgenommen werden kann.

Zusammenfassend ist festzuhalten, dass die erfindungsgemäßen dentalen Teilprothesen ein sehr rasches und kostengünstiges anwenderfreundliches Handling zulassen und exzellente Verarbeitungseigenschaften aufweisen. Dies sind u.a. auch die einfache und schnelle Polierbarkeit sowie die geringe Schrumpfung beim Aushärtungsprozess aufgrund des hohen Füllgrades an Feststoffpartikeln. Die erfindungsgemäßen dentalen Teilprothesen 1 weisen ein hervorragendes Abrasionsverhalten und sehr gute physikalische Eigenschaften auf. Durch die eingangs genannten Zink- und Fluoranteile in den Feststoffpartikeln 6 kann zusätzlich eine antibakterielle Wirkung der Oberflächen erzielt werden. Die erfindungsgemäßen dentalen Teilprothesen 1 weisen sehr natürlich anmutende Fluoreszenzen auf.

### Legende zu den Hinweisziffern:

- 1: dentale Teilprothese
- 2: Oberfläche
- 3: Seitenzahn
- 4: zusammengesetztes Material
- 5: Bindemittel
- 6: Feststoffpartikel
- 7: Schicht
- 8: Höcker
- 9: Fissur
- 10: Hohlkrone
- 11: Hohlraum
- 12: Seitenwand
- 13: Schale
- 14: Matrizenband
- 15: Haftvermittler
- 16: Befestigungsmaterial
- 17: ursprüngliche Bisshöhe
- 18: Implantat

## Patentansprüche

1. Dentale Teilprothese (1) mit zumindest einer Oberfläche (2) zur Ausbildung der Kaufläche eines Seitenzahns (3), wobei die dentale Teilprothese (1) ein zusammengesetztes Material (4) aufweist und das zusammengesetzte Material (4) zumindest ein organisches Bindemittel (5), vorzugsweise Methacrylat, und anorganische Feststoffpartikel (6) als Füllstoff enthält und zumindest die Oberfläche (2) zur Ausbildung der Kaufläche, vorzugsweise die gesamte nach außen weisende Oberfläche der dentalen Teilprothese (1), zumindest bereichsweise, vorzugsweise vollständig, von einer Schicht (7), welche miteinander verschmolzene Feststoffpartikel (6) aufweist, gebildet ist, **dadurch gekennzeichnet, dass** die Feststoffpartikel (6) Glas, vorzugsweise eine Mischung verschiedener Glasarten, aufweisen oder daraus bestehen und die Feststoffpartikel (6), abgesehen von der Schicht (7), in der sie verschmolzen sind, im zusammgensetzten Material (4) in das organische Bindemittel (5) eingebunden sind und von diesem zusammengehalten werden, wobei die dentale Teilprothese (1) im Bereich der Oberfläche (2) zur Aubildung der Kaufläche des Seitenzahns (3) eine Dicke zwischen 0,3mm und 0,6mm aufweist und die Schicht (7), welche miteinander verschmolzene Feststoffpartikel (6) aufweist, eine verglaste, in einem Schnitt durch die dentale Teilprothese (1) nachweisbare Schmelzschicht mit einer Dicke zwischen 20 µm und 40 µm ist.

2. Dentale Teilprothese (1) nach Anspruch 1, **dadurch gekennzeichnet, dass** die Schicht (7) ausschließlich aus miteinander verschmolzenen Feststoffpartikeln (6) gebildet ist.

3. Dentale Teilprothese (1) nach Anspruch 1 oder 2, **dadurch gekennzeichnet, dass** die Schicht (7) als eine durchgehende Schmelzschicht ausgebildet ist.

4. Dentale Teilprothese (1) nach einem der Ansprüche 1 bis 3, **dadurch gekennzeichnet, dass** zumindest die Oberfläche (2) zur Ausbildung der Kaufläche, vorzugsweise die gesamte nach außen weisende Oberfläche der dentalen Teilprothese (1), zumindest bereichsweise laserbehandelt ist.

5. Dentale Teilprothese (1) nach einem der Ansprüche 1 bis 4, **dadurch gekennzeichnet, dass** die Oberfläche (2) zur Ausbildung der Kaufläche Höcker (8) und zwischen den Höckern (8) verlaufende Fissuren (9) aufweist.

6. Dentale Teilprothese (1) nach einem der Ansprüche 1 bis 5, **dadurch gekennzeichnet, dass** der Volumenanteil der Feststoffpartikel (6) am zusammengesetzten Material (4) zumindest 78% beträgt.

7. Dentale Teilprothese (1) nach einem der Ansprüche 1 bis 6, **dadurch gekennzeichnet, dass** sie in Form einer Hohlkrone (10), mit einen Hohlraum (11) der Hohlkrone (10) umschließenden und zum Hinabreichen bis zum Zahnfleisch des Patienten vorgesehenen Seitenwänden (12), oder in Form einer Schale (13), mit höchstens unvollständig zum Hinabreichen bis zum Zahnfleisch des Patienten vorgesehenen Seitenwänden (12), ausgebildet ist.

8. Dentale Teilprothese (1) nach einem der Ansprüche 1 bis 7, **dadurch gekennzeichnet, dass** zumindest die Oberfläche (2) zur Ausbildung der Kaufläche Zink- und/oder Fluoranteile in den Feststoffpartikeln (6) aufweist.

9. Dentale Teilprothese (1) nach einem der Ansprüche 1 bis 8, **dadurch gekennzeichnet, dass** der Füllstoff Feststoffpartikel (6) mit voneinander verschiedenen Korngrößen, insbesondere mit Korngrößen zwischen 0,01 µm und 3µm, aufweist.

10. Verfahren zur Herstellung einer dentalen Teilprothese (1) nach einem der Ansprüche 1 bis 9, **dadurch gekennzeichnet, dass** zumindest die Oberfläche (2) zur Ausbildung der Kaufläche, vorzugsweise die gesamte nach außen weisende Oberfläche der dentalen Teilprothese (1), mittels Laserbestrahlung behandelt wird.

11. Verfahren nach Anspruch 10, **dadurch gekennzeichnet, dass** bei der Laserbestrahlung zumindest im Bereich der Oberfläche (2) zur Ausbildung der Kaufläche, vorzugsweise im Bereich der gesamten nach außen weisenden Oberfläche der dentalen Teilprothese (1), das organische Bindemittel (5) ausgebrannt wird und die Festsstoffpartikel (6) aufgeschmolzen und miteinander verschmolzen werden.

## Claims

1. A partial dental prosthesis (1) having at least one surface (2) for forming the chewing surface of a side tooth (3), wherein the partial dental prosthesis (1) has a composite material (4) and the composite material (4) contains at least one organic binding agent (5), preferably methacrylate, and inorganic solids particles (6) as filler and at least the surface (2) for forming the chewing surface, preferably the entire outwards-facing surface of the partial dental prosthesis (1), at least in regions, preferably completely, is formed by a layer (7) which has solids particles (6) which are fused together, **characterised in that** the solids particles (6) have or consist of glass, preferably a mixture of different glass types, and the solids particles (6), apart from the layer (7) in which they are fused, in the composite material (4) are incorporated in the organic binding agent (5) and are held together thereby, wherein the partial dental prosthesis (1) in the region of the surface (2) for forming the chewing surface of the side tooth (3) has a thickness of between 0.3 mm and 0.6 mm and the layer (7) which has solids particles (6) which are fused together is a vitrified molten layer, detectable in a section through the partial dental prosthesis (1) and having a thickness of between 20 µm and 40 µm.

2. A partial dental prosthesis (1) according to Claim 1, **characterised in that** the layer (7) is formed exclusively from solids particles (6) which are fused together.

3. A partial dental prosthesis (1) according to Claim 1 or 2, **characterised in that** the layer (7) is formed as a continuous molten layer.

4. A partial dental prosthesis (1) according to one of Claims 1 to 3. **characterised in that** at least the surface (2) for forming the chewing surface, preferably the entire outwards-facing surface of the partial dental prosthesis (1), is laser-treated at least in regions.

5. A partial dental prosthesis (1) according to one of Claims 1 to 4, **characterised in that** the surface (2) for forming the chewing surface has humps (8) and fissures (9) running between the humps (8).

6. A partial dental prosthesis (1) according to one of Claims 1 to 5, **characterised in that** the volume percent of the solids particles (6) in the composite material (4) is at least 78%.

7. A partial dental prosthesis (1) according to one of Claims 1 to 6, **characterised in that** it is in the form of a hollow crown (10), with side walls (12) enclosing a cavity (11) of the hollow crown (10) and provided for extending down as far as the gums of the patient, or in the form of a shell (13) having side walls (12) at most provided incompletely for extending down as far as the gums of the patient.

8. A partial dental prosthesis (1) according to one of Claims 1 to 7, **characterised in that** at least the surface (2) for forming the chewing surface has zinc and/or fluorine contents in the solids particles (6).

9. A partial dental prosthesis (1) according to one of Claims 1 to 8, **characterised in that** the filler has solids particles (6) with differing grain sizes, in particular with grain sizes of between 0.01 µm and 3 µm.

10. A method for producing a partial dental prosthesis (1) according to one of Claims 1 to 9, **characterised in that** at least the surface (2) for forming the chewing surface, preferably the entire outwards-facing surface of the partial dental prosthesis (1), is treated by laser radiation.

11. A method according to Claim 10, **characterised in that** upon the laser radiation at least in the region of the surface (2) for forming the chewing surface, preferably in the region of the entire outwards-facing surface of the partial dental prosthesis (1), the organic binding agent (5) is burned out and the solids particles (6) are melted and fused together.

## Revendications

1. Prothèse dentaire partielle (1) comprenant au moins une surface (2) destinée à former la surface occlusale d'une dent postérieure (3), la prothèse dentaire partielle (1) comportant un matériau composite (4), et le matériau composite (4) contenant au moins un liant organique (5), de préférence du méthacrylate, et des particules solides minérales (6) en tant que charge, et au moins la surface (2) destinée à former la surface occlusale, de préférence toute la surface de la prothèse dentaire partielle (1) dirigée vers l'extérieur, étant formée au moins par endroits, de préférence entièrement, par une couche (7) qui présente des particules solides (6) fusionnées ensemble, **caractérisée en ce que** les particules solides (6) comportent du verre, de préférence un mélange de différents types de verre, ou en sont composées, et les particules solides (6), à l'exception de la couche (7) dans laquelle elles sont fusionnées, sont incorporées dans le liant organique (5) dans le matériau composite (4) et sont retenues ensemble par celui-ci, la prothèse dentaire partielle (1) ayant une épaisseur comprise entre 0,3 mm et 0,6 mm dans la région de la surface (2) destinée à former la surface occlusale de la dent postérieure (3), et la couche (7) qui comporte des particules solides (6) fusionnées ensemble est une couche d'émail vitrifié qui est décelable dans une coupe à travers la prothèse dentaire partielle (1) et qui a une épaisseur comprise entre 20 µm et 40 µm.

2. Prothèse dentaire partielle (1) selon la revendication 1, **caractérisée en ce que** la couche (7) est formée exclusivement de particules solides (6) fusionnées ensemble.

3. Prothèse dentaire partielle (1) selon la revendication 1 ou 2, **caractérisée en ce que** la couche (7) est réalisée sous forme d'une couche d'émail continue.

4. Prothèse dentaire partielle (1) selon l'une des revendications 1 à 3, **caractérisée en ce qu'**au moins la surface (2) destinée à former la surface occlusale, de préférence toute la surface de la prothèse dentaire partielle (1) dirigée vers l'extérieur, est traitée au laser au moins par endroits.

5. Prothèse dentaire partielle (1) selon l'une des revendications 1 à 4, **caractérisée en ce que** la surface (2) destinée à former la surface occlusale comporte des cuspides (8) et des sillons (9) passant entre les cuspides (8).

6. Prothèse dentaire partielle (1) selon l'une des revendications 1 à 5, **caractérisée en ce que** la fraction volumique des particules solides (6) dans le matériau composite (4) est d'au moins 78%.

7. Prothèse dentaire partielle (1) selon l'une des revendications 1 à 6, **caractérisée en ce qu'**elle se présente sous la forme d'une couronne creuse (10) avec des parois latérales (12) entourant un espace creux (11) de la couronne creuse (10) et prévues pour atteindre les gencives du patient, ou sous la forme d'une coque (13) avec des parois latérales (12) prévues pour atteindre au plus partiellement les gencives du patient.

8. Prothèse dentaire partielle (1) selon l'une des revendications 1 à 7, **caractérisée en ce qu'**au moins la surface (2) destinée à former la surface occlusale comporte des fractions de zinc et/ou de fluor dans les particules solides (6).

9. Prothèse dentaire partielle (1) selon l'une des revendications 1 à 8, **caractérisée en ce que** la charge comporte des particules solides (6) de différentes granulométries, en particulier de granulométrie comprise entre 0,01 µm et 3 µm.

10. Procédé de fabrication d'une prothèse dentaire partielle (1) selon l'une des revendications 1 à 9, **caractérisé en ce qu'**au moins la surface (2) destinée à former la surface occlusale, de préférence toute la surface de la prothèse dentaire partielle (1) dirigée vers l'extérieur, est traitée par rayonnement laser.

11. Procédé selon la revendication 10, **caractérisé en ce que** durant le traitement par rayonnement laser, au moins dans la zone de la surface (2) destinée à former la surface occlusale, de préférence dans la zone de toute la surface de la prothèse dentaire partielle (1) dirigée vers l'extérieur, le liant organique (5) est cuit et les particules solides (6) sont fondues et fusionnées ensemble.
